# EUROPÄISCHE PATENTSCHRIFT

(11) **EP 4 045 902 B1**
(45) Veröffentlichungstag und Bekanntmachung des Hinweises auf die Patenterteilung: **23.08.2023**
(21) Anmeldenummer: 20781450.0
(22) Anmeldetag: 22.09.2020
(51) Int. Cl.: G01N 27/417

(54) **VERFAHREN ZUM BETREIBEN EINER BREITBANDLAMBDASONDE**
METHOD FOR OPERATING A BROADBAND LAMBDA PROBE
PROCEDE DESTINE AU FONCTIONNEMENT D'UNE SONDE LAMBDA À LARGE BANDE

(30) Priorität: 15.10.2019 DE 102019215819
(43) Veröffentlichungstag der Anmeldung: 24.08.2022
(73) Patentinhaber: Robert Bosch GmbH, 70442 Stuttgart (DE)
(72) Erfinder: LEDERMANN, Bernhard, 71263 Weil Der Stadt (DE); HUBER, Hanna, 70469 Stuttgart (DE); ZIMMERSCHIED, Ralf, 64287 Darmstadt (DE)
(86) Internationale Anmeldenummer: PCT/EP2020/076374
(87) Internationale Veröffentlichungsnummer: WO 2021/073837

(56) Entgegenhaltungen:
- DE-A1-102013 202 161
- DE-A1-102013 202 260
- DE-A1-102013 221 298
- DE-A1-102014 007 168

## Beschreibung

### Stand der Technik

Aus dem Stand der Technik ist eine Vielzahl von Sensorelementen und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden.

Zusätzlich sind auch andere Eigenschaften des Messgases erfassbar, wie beispielsweise die Temperatur.

Aus dem Stand der Technik sind insbesondere Sensoren mit keramischen Sensorelementen bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

Beispielsweise können derartige Sensorelemente als so genannte Lambdasonden ausgestaltet sein, wie sie beispielsweise aus Konrad Reif (Hrsg.): Sensoren im Kraftfahrzeug, 1. Auflage 2010, S. 160-165, bekannt sind. Mit Breitbandlambdasonden, insbesondere mit planaren Breitbandlambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ beschreibt dieses Luft-Kraftstoff-Verhältnis.

Laut Gesetzgebung zur so genannten On Board Diagnose ist es gefordert, das Signal einer Breitbandlambdasonde zu überwachen. Ein zu überwachendes Fehlerbild ist dabei ein additiver Offset, vor allem in Benzin-Systemen bei stöchiometrischer Verbrennung (λ=1.0). Aktuell wird dieser Offset mit Hilfe einer Zwei-Punkt-Lambdasonde hinter dem Katalysator identifiziert, in dem bei aktiver Lambda=1-Regelung (Vor- und Hinterkatregelung aktiv) die Differenz des Lambdawerts der Sensoren vor und hinter Kat als Offset der Sonde vor dem Katalysator betrachtet wird. Dafür ist es notwendig, dass es in jedem Abgastrakt eine Lambdasonde vor dem Katalysator und eine Lambdasonde nach dem Katalysator gibt.

Aus der EP 0 444 674 B1 ist ein Verfahren bekannt, welches einen Offset der Breitbandlambdasonde vor dem Katalysator identifiziert, ohne dass eine zweite Lambdasonde hinter dem Katalysator als Referenz notwendig ist. Dies kann man als Selbstabgleich bezeichnen, da nur Signale der Breitbandlambdasonde selbst verwendet werden. Bei diesem Verfahren wird neben dem Pumpstromsignal, aus welchem der Lambdawert des Messgases berechnet wird, zusätzlich die Pumpspannung ausgewertet, wobei das Pumpspannungssignal als Referenz dient und angenommen wird, dass die Pumpspannung, insbesondere bei Lambda=1.0, keinen Alterungs- oder Störeffekten unterliegt. Durch Abgleich von Pumpstrom und Pumpspannung bei Lambda=1.0, was theoretisch einer Pumpspannung vom ungefähr 0 mV entspricht, wird hierbei auf einen Pumpstromoffset und damit auch einen Lambdaoffset geschlossen.

Aus der DE 10 2013 202 161 A1 und DE 10 2013 202 260 A1 sind Verfahren bekannt, die ebenfalls auf dem Pumpstrom und der Pumpspannung basieren, aus beiden Größen aber je einen Lambdawert berechnen, wobei die Differenz dieser beiden Lambdawerte als Lambdaoffset der Breitbandlambdasonde interpretiert wird, wobei der Lambdawert berechnet aus der Pumpspannung als Referenz dient.

Trotz der Vorteile, der aus dem Stand der Technik bekannten Verfahren zum Betreiben von Breitbandlambdasonden, beinhalten diese noch Verbesserungspotenzial. So wird bei den genannten Verfahren direkt ein aus der Pumpspannung berechneter Pumpstrom oder Lambdawert mit dem gemessenen Pumpstrom oder dem daraus berechneten Lambdawert verglichen. Diese Verfahren benötigen einen Filter, um Störungen aus den gemessenen Signalen auszugleichen bzw. herauszumitteln.

### Offenbarung der Erfindung

Es wird daher ein Verfahren zum Betreiben einer Breitbandlambdasonde vorgeschlagen, welches die Nachteile bekannter Verfahren zumindest weitgehend vermeidet und das insbesondere erlaubt, einen additiven Offset einer Breitbandlambdasonde zu identifizieren und gegebenenfalls zu adaptieren, wobei allein Signale der Lambdasonde selbst verwendet werden und kein weiterer Sensor, wie beispielsweise eine Lambdasonde, hinter dem Katalysator notwendig ist.

Bei dem erfindungsgemäßen Verfahren zum Betreiben einer Breitbandlambdasonde, die ein keramisches Sensorelement aufweist, das eine elektrochemische Pumpzelle, eine elektrochemische Nernstzelle, eine Diffusionsbarriere und einen Hohlraum aufweist, wobei der Hohlraum über die Diffusionsbarriere mit einem Abgas kommuniziert, wobei die elektrochemische Pumpzelle eine äußere Pumpelektrode aufweist, die dem Abgas unmittelbar ausgesetzt ist, und eine innere Pumpelektrode aufweist, die in dem Hohlraum angeordnet ist, und einen zwischen der äußere Pumpelektrode und der inneren Pumpelektrode angeordneten ersten Festelektrolyten aufweist, wobei die elektrochemische Nernstzelle eine Nernstelektrode aufweist, die in dem Hohlraum angeordnet ist, und eine Referenzelektrode aufweist, die in einem Referenzgasraum angeordnet ist, und einen zwischen der Nernstelektrode und der Referenzelektrode angeordneten zweiten Festelektrolyten aufweist, wobei zwischen der äußeren Pumpelektrode und der inneren Pumpelektrode eine Pumpspannung anlegbar ist, so dass ein Pumpstrom fließt, wobei zwischen der Nernstelektrode und der Referenzelektrode eine Nernstspannung messbar ist, wobei basierend auf dem Pumpstrom ein Lambdawert eines Messgases erfassbar ist, umfasst das Verfahren die folgenden Schritte, bevorzugt in der angegebenen Reihenfolge:
- Regeln der Nernstspannung auf einen vorgegebenen Sollwert durch Stellen der Pumpspannung und/oder des Pumpstroms,
- Messen der Pumpspannung, des Pumpstroms und/oder des Lambdawerts,
- Bilden von Messwertpaaren basierend auf gemessenen Messwerten der Pumpspannung, des Pumpstroms und/oder des Lambdawerts,
- Berechnen einer Regressionsgeraden basierend auf den Messwertpaaren zum Approximieren eines vorbestimmten Abschnitts einer Referenzkennlinie der Pumpspannung, und
- Ermitteln eines Pumpstromoffsets und/oder Lambdaoffsets basierend auf der Regressionsgeraden.

Der vorbestimmte Abschnitt der Referenzkennlinie kann ein Abschnitt mit einem steilen Verlauf sein. Unter einem steilen Verlauf kann ein Verlauf verstanden werden, dessen Steigung einen vorbestimmten Schwellwert überschreitet, wobei der vorbestimmte Schwellwert von null verschieden ist.

Der Abschnitt mit dem steilen Verlauf kann durch ein Pumpstromintervall, Lambdaintervall und/oder Pumpspannungsintervall definiert ist. Somit wird der Abschnitt durch eine untere Grenze und eine obere Grenze für den Pumpstrom, das Lambda und/oder die Pumpspannung definiert.

Das Pumpstromoffset und/oder Lambdaoffset können basierend auf einem Abstand der Regressionsgeraden von der Referenzkennlinie der Pumpspannung an einer vorbestimmten Stelle ermittelt werden. Beispielsweise ist die vorbestimmte Stelle ein Pumpstrom bei einer Pumpspannung von 0 mV oder ein Pumpstrom bei Lambda =1.

Das Verfahren kann weiterhin Ermitteln von einem korrigierten Pumpstrom und/oder Lambdawerts basierend auf dem Pumpstromoffset und/oder Lambdaoffset umfassen. Damit wird die Messgenauigkeit erhöht.

Alternativ oder zusätzlich kann das Verfahren weiterhin Durchführen einer Diagnose der Breitbandlambdasonde umfassen, wobei ein Fehler der Breitbandlambdasonde identifiziert wird, falls der Pumpstromoffset und/oder Lambdaoffset einen ersten vorbestimmten Schwellwert überschreitet oder einen zweiten vorbestimmten Schwellwert, der sich von dem ersten vorbestimmten Schwellwert unterscheidet, unterschreitet. Entsprechend kann der Pumpstromoffset und/oder Lambdaoffset als Diagnosekriterium verwendet werden, um einen Selbstabgleich durchzuführen, der den gesetzlich geforderten Vorgaben zur On Board Diagnose entspricht.

Die Regressionsgerade kann mittels des Verfahrens der kleinsten Quadrate berechnet werden. Dabei kann das Berechnungsverfahren der kleinsten Quadrate rekursiv implementierbar sein. Durch Bilden der Regressionsgeraden können implizit Störungen aus den gemessenen Signalen ausgeglichen bzw. herausgemittelt werden, so dass kein weiterer Filter notwendig ist. Weiterhin kann die Regressionsgerade mit dem linearen Verfahren der kleinsten Quadrate ermittelt werden, was sich auch rekursiv implementieren lässt, so dass der Speicher- und Rechenbedarf z.B. in einem Motorsteuergerät gering ist.

Die Messwertpaare können eine gemessene Pumpspannung Up abhängig vom Pumpstrom Ip, einen gemessenen Pumpstrom Ip abhängig von der Pumpspannung, eine gemessene Pumpspannung abhängig von Lambda oder gemessenes Lambda abhängig von der Pumpspannung Up umfassen. Mit anderen Worten wird aus mehreren Messwerten eine Regressionsgerade berechnet wie z.B. gemessene Pumpspannung Up abhängig vom Pumpstrom Ip oder umgekehrt oder gemessene Pumpspannung abhängig von Lambda oder umgekehrt.

Weiterhin wird ein Computerprogramm vorgeschlagen, welches dazu eingerichtet ist, unter Verwendung einer Breitbandlambdasonde, jeden Schritt des Verfahrens nach einem der vorhergehenden Ausführungen durchzuführen.

Weiterhin wird ein elektronisches Speichermedium vorgeschlagen, auf welchem ein solches Computerprogramm gespeichert ist.

Weiterhin wird ein elektronisches Steuergerät vorgeschlagen, welches ein solches elektronisches Speichermedium umfasst.

Ein Grundgedanke der vorliegenden Erfindung ist, dass weiterhin die Pumpspannung als Referenz dient, dass aber nicht direkt ein aus der Pumpspannung berechneter Pumpstrom oder Lambdawert mit dem gemessenen Pumpstrom oder dem daraus berechneten Lambdawert verglichen wird, sondern zunächst aus mehreren Messwerten eine Regressionsgerade berechnet wird. Die Regressionsgerade soll dabei den steilen Abschnitt einer für die Breitbandlambdasonde typischen Kennlinie abbilden. Der Abstand dieser Regressionsgeraden von einer nominalen Sensorkennlinie an einem typischen Punkt kann dann als Offset der Breitbandlambdasonde interpretiert werden.

Vorteil der Erfindung ist, dass durch Bilden der Regressionsgeraden implizit Störungen aus den gemessenen Signalen ausgeglichen bzw. herausgemittelt werden, so dass kein weiterer Filter notwendig ist. Weiterhin kann die Regressionsgerade mit dem linearen Verfahren der kleinsten Quadrate ermittelt werden, was sich auch rekursiv implementieren lässt, so dass der Speicher- und Rechenbedarf z.B. in einem Motorsteuergerät gering ist.

Außerdem ist das Verfahren anwendbar für Größen auf Basis Pumpstrom oder Lambda. Damit kann je nach Spezifikation der Breitbandlambdasonde die Regressionsgerade Pumpspannung = f(Pumpstrom) oder Pumpspannung = f(Lambda) berechnet und mit der auf derselben Basis spezifizierten nominalen Kennlinie verglichen werden.

Da der Vergleichspunkt von Regressionsgerade und nominaler Kennlinie frei wählbar ist z.B. Pumpspannung = 0mV oder Pumpspannung bei λ=1, kann dieser vorteilhafterweise auf einen gut spezifizierbaren und stabilen Punkt der Kennlinie der Breitbandlambdasonde gelegt werden.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Querschnittsansicht einer Breitbandlambdasonde,

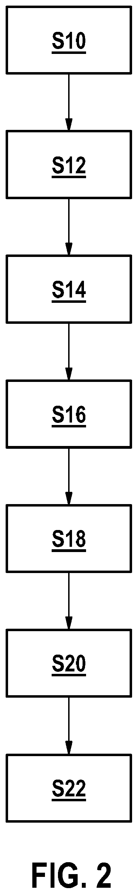

- Figur 2: exemplarisch ein Flussdiagramm des erfindungsgemäßen Verfahrens,
- Figur 3: ein Ergebnis des Verfahrens bei einer neuen Breitbandlambdasonde ohne Offset,
- Figur 4: ein Ergebnis des Verfahrens bei einer neuen Breitbandlambdasonde mit Offset und
- Figur 5: ein Ergebnis des Verfahrens bei gealterten Breitbandlambdasonden mit Offset.

### Ausführungsformen der Erfindung

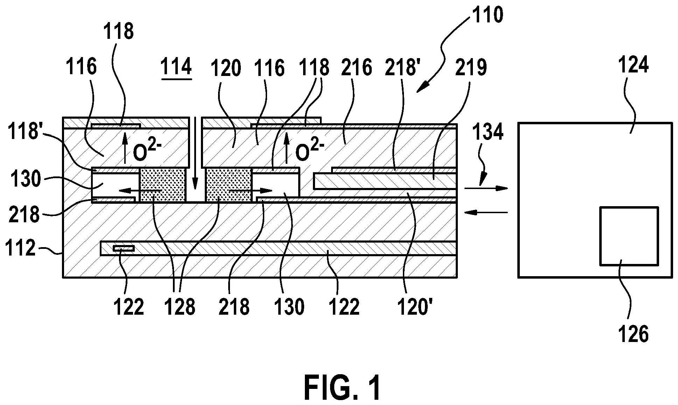

In Figur 1 zeigt eine Querschnittsansicht einer Breitband-Lambda-Sonde 110. Die Breitband-Lambda-Sonde 110 ist mit einem elektronischen Steuergerät 124 verbunden. Die Breitband-Lambda-Sonde 110 umfasst ein Sensorelement 112. Das Sensorelement 112 weist eine elektrochemische Pumpzelle 116 mit einer äußeren Pumpelektrode 118 und einer inneren Pumpelektrode 118' und einem dazwischen angeordneten Festelektrolyten 120 auf. Die äußere Pumpelektrode 118 ist von einem Messgas114, wie beispielsweise Abgas, lediglich durch eine Schutzschicht getrennt, unmittelbar ausgesetzt, die innere Pumpelektrode 118' ist in einem inneren Hohlraum 130 des Sensorelements 112 angeordnet. Der Zutritt des Gases zu dem Hohlraum 130 bzw. zu der in ihm angeordneten Elektrode 118 ist durch eine poröse Diffusionsbarriere 128 limitiert.

Das Sensorelement 112 weist eine elektrochemische Nernstzelle 216 mit einer Nernstelektrode 218 und einer in einem Referenzkanal 219 angeordneten Referenzelektrode 218` auf, die durch den zweiten Festelektrolyten 120' miteinander verbunden sind. Das Sensorelement 112 umfasst ferner ein als elektrische Widerstandheizung ausgebildetes Heizelement 122.

Das elektronische Steuergerät 124 ist eingerichtet, um das erfindungsgemäße Verfahren zum Betrieb der Breitbandlambdasonde durchzuführen, insbesondere um eine aktivierbare und/oder deaktivierbare äußere elektrische Beschaltung zu realisieren, durch die elektrische Spannungen und/oder elektrische Ströme in die elektrochemische Pumpzelle 116, die elektrochemische Nernstzelle 216 und/oder das Heizelement 122 einprägbar sind. Überdies kann das Steuergerät 124 eingerichtet sein, die Bestimmung einer Temperatur des Sensorelements 112 und/oder der elektrochemischen Pumpzelle 116 und/oder der elektrochemischen Nernstzelle 216 vorzunehmen, beispielsweise durch entsprechende Widerstandsmessungen oder dergleichen. Das elektronische Steuergerät 124 kann zu diesem Zweck mindestens eine Datenverarbeitungsvorrichtung 126 umfassen. Weiterhin kann das elektronische Steuergerät 124 ein elektronisches Speichermedium umfassen, auf dem ein Computerprogramm gespeichert ist, das Anweisungen zum Durchführen der einzelnen Verfahrensschritte umfasst. Das Sensorelement 112 kann über mindestens eine Schnittstelle 134 mit dem elektronischen Steuergerät 124 und/oder mit der Datenverarbeitungsvorrichtung 126 verbunden sein. Insbesondere ist zwischen der äußeren Pumpelektrode 118 und der inneren Pumpelektrode 118` eine Pumpspannung Up anlegbar, sodass ein Pumpstrom Ip fließt, und zwischen der Nernstelektrode 218 und der Referenzelektrode 218` eine Nernstspannung Un messbar.

Nachfolgend wird das erfindungsgemäße Verfahren beschrieben. Der Betrieb der Lambdasonde 110 beginnt, nachdem das Sensorelement 112 ausreichend aufgeheizt ist, beispielsweise nachdem mittels der elektrischen Widerstandsheizung eine Betriebstemperatur zwischen 700°C und 800°C eingeregelt ist. Die Temperatur des Sensorelements 112 und damit der Innenwiderstand der elektrochemischen Zellen 116, 216 wird nachfolgend weiterhin stets auf diese Temperatur geregelt.

Im Betrieb der Breitbandlambdasonde wird die Nernstspannung Un stets auf einen vorgegebenen Sollwert, beispielsweise 450mV geregelt, wie in Schritt S10 angegeben ist. Hierzu wird die Pumpspannung Up und/oder der Pumpstroms Ip durch einen Regelalgorithmus geeignet gestellt. Es wird somit in dem inneren Hohlraum 130 ein Gasgemisch mit einer vorgegebenen Luftzahl eingestellt, beispielsweise Lambda = 1. Dieser Pumpstrom Ip fließt physikalisch als lonenstrom in der elektrochemischen Pumpzelle 116 und als Elektronenstrom in deren Zuleitung und ist grundsätzlich bereits ein Maß für den Partialdruck des Sauerstoffs im Messgas 114, wie beispielsweise Abgas, also für Lambda. Basierend auf dem Pumpstrom Ip ist somit ein Lambdawert des Messgases 114 erfassbar. Die Grundlage für das Einstellen der Spannung an so genannten Nernstzellen ist das chemische Potential. Dieses ist jedoch gegenüber einem definierten Fix-Potential anzugeben. Innerhalb der Lambdasonde 110 existiert ein im Normalfall klar definiertes chemisches Potential an dem RE-Anschluss der Lambdasonde, wo sich die sogenannte Luft-Referenz befindet. Auf diese Luft-Referenz beziehen sich alle weiteren Potentiale des Lambda-Sensors inklusive dem Potential am IPE-Pin, wo sich der sogenannte Lambda-1-Hohlraum 130 befindet, dessen chemisches Potential über eine Differenzspannung von 450mV so eingestellt wird, dass sich dort der Lambda-Wert von 1 einstellt. Die bisher benannte Pumpspannung Up ist die Spannung des APE-Pins gegenüber dem IPE-Pin. Da sich jedoch der IPE-Pin auf ein Potential am RE-Pin bezieht, könnte bei dem Verfahren statt der Pumpspannung Up auch die Spannung zwischen APE-Pin und RE-Pin verwendet werden, die in diesem Fall als Sensor-internes Signal einer binären Lambdasonde bezeichnet werden kann.

In Schritt S12 wird die Pumpspannung Up, der Pumpstrom Ip und/oder der Lambdawert des Messgases gemessen, beispielsweise erfasst. Die dadurch erfassten Messwerte werden zumindest vorübergehend gespeichert.

Basierend auf den gemessenen Messwerten der Pumpspannung Up, des Pumpstroms Ip und/oder des Lambdawerts des Messgases werden in Schritt S14 Messwertpaare gebildet.

In Schritt S16 wird basierend auf den Messwertpaaren eine Regressionsgerade zum Approximieren eines vorbestimmten Abschnitts einer Referenzkennlinie der Pumpspannung Up berechnet. So wird aus mehreren Messwertpaaren wie beispielsweise gemessene Pumpspannung Up abhängig vom Pumpstrom Ip oder umgekehrt oder gemessene Pumpspannung Up abhängig von Lambda λ oder umgekehrt eine Regressionsgerade berechnet. Der vorbestimmte Abschnitt der Referenzkennlinie kann ein Abschnitt mit einem steilen Verlauf sein, d.h. ein Abschnitt mit einer Steigung, die deutlich größer, d.h. beispielsweise mindestens Faktor 3 und beispielsweise bevorzugt mindestens Faktor 5, als in übrigen Abschnitten der Kennlinie ist. Ein solch steiler Verlauf ist für Lambdasonden typisch und allgemein bekannt. Die Regressionsgerade soll somit den steilen Abschnitt einer für die Breitbandlambdasonde typischen Funktion Up = f(lp) oder Up=f(λ) abbilden. Der Abschnitt mit dem steilen Verlauf kann durch ein Pumpstromintervall, Lambdaintervall und/oder Pumpspannungsintervall definiert sein. Mit anderen Worten kann der steile Abschnitt dabei anhand der spezifizierten nominalen Kennlinie durch ein Pumpstromintervall oder LambdaIntervall und/oder ein Pumpspannungsintervall definiert werden.

Zur Schätzung der Regressionsgeraden können zum einen Messwertpaare aus dem definierten Up/Ip- oder Up/λ-Intervall zunächst zwischengespeichert und dann eine lineare Regression mit dem Verfahren der kleinsten Quadrate in einem Rechenschritt durchgeführt werden. Alternativ ist die Berechnung auch rekursiv möglich, wodurch Speicher- und Rechenbedarf reduziert wird. Dabei kann sowohl Up abhängig von Ip oder λ berechnet werden oder auch der umgekehrte Zusammenhang, je nachdem welche Größe als stärker verrauscht betrachtet wird. Annahme des Verfahrens der kleinsten Quadrate ist nämlich, dass nur die abhängige Größe (Y-Achse) gestört ist. Da hier jedoch sowohl die Pumpspannung als auch der Pumpstrom oder Lambda gemessen und damit gestört sind, kann auch das Verfahren der totalen kleinsten Quadrate vorteilhaft verwendet werden, welches Störungen sowohl auf X-Achse als auch auf der Y-Achse bei der Parameterschätzung berücksichtigen kann.

In Schritt S18 wird basierend auf der Regressionsgeraden ein Pumpstromoffset und/oder Lambdaoffset ermittelt. Insbesondere wird Der Pumpstromoffset und/oder Lambdaoffset basierend auf einem Abstand der Regressionsgeraden von der Referenzkennlinie der Pumpspannung an einer vorbestimmten Stelle ermittelt. Die vorbestimmte Stelle ist beispielsweise ein Pumpstrom bei einer Pumpspannung von 0 mV oder ein Pumpstrom bei Lambda = 1. Mit anderen Worten kann der Abstand dieser Regressionsgeraden von einer nominalen Sensorkennlinie an einem typischen Punkt, wie z.B. horizontaler Abstand von Regressionsgerade zu nominaler Sensorkennlinie Up=f(lp) bei Up=0mV oder Up bei λ=1, dann als Offset, wie z.B. Pumpstrom oder Lambdaoffset, interpretiert werden.

In Schritt S20 wird basierend auf dem Pumpstromoffset und/oder Lambdaoffset ein korrigierter Pumpstrom und/oder Lambdawert ermittelt, beispielsweise durch Subtraktion oder Addition von dem gemessenen Pumpstrom Ip oder Lambda. Der mit diesem Verfahren ermittelte Pumpstromoffset oder Lambdaoffset kann somit direkt zur Adaption und Korrektur des fehlerhaften Pumpstromsignals oder Lambdasignals verwendet werden.

Weiterhin kann in Schritt S22 optional eine Diagnose der Breitbandlambdasonde 110 durchgeführt werden, wobei ein Fehler der Breitbandlambdasonde 110 identifiziert wird, falls der Pumpstromoffset und/oder Lambdaoffset einen ersten vorbestimmten Schwellwert überschreitet oder einen zweiten vorbestimmten Schwellwert, der sich von dem ersten vorbestimmten Schwellwert unterscheidet, unterschreitet. Weiterhin kann somit der identifizierte Pumpstromoffset zur Diagnose der Breitbandlambdasonde 110 verwendet werden, indem ein Fehlereintrag erfolgt, wenn der identifizierte Pumpstromoffset oder Lambdaoffset größer oder kleiner spezifizierter Schwellwerte ist.

Die Verwendung der Erfindung kann nachgewiesen werden, wenn z.B. beim Einbringen eines Leckstroms oder einer Einkopplung auf den Pumpstrom ein Fehler erkannt wird. Dieser wird dann durch das Steuergerät eingetragen und über die Diagnose-Schnittstelle messbar gemacht.

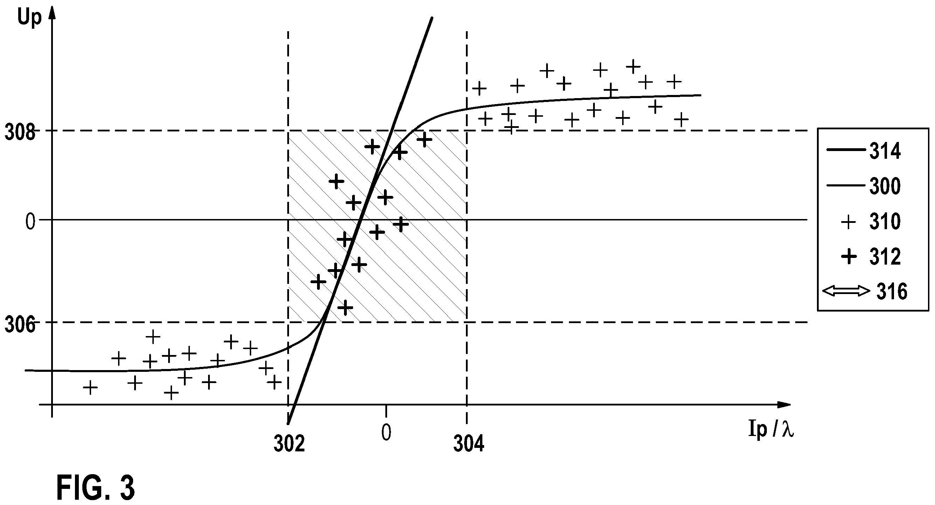

Figur 3 zeigt ein Ergebnis des Verfahrens bei einer neuen Breitbandlambdasonde ohne Offset. Bei dem gezeigten Beispiel ist auf der X-Achse der gemessene Pumpstrom Ip oder das gemessene Lambda aufgetragen. Auf der Y-Achse ist die davon abhängige Pumpspannung Up aufgetragen. Weiterhin ist der Verlauf einer beispielhaften Referenzkennlinie 300 der neuen Breitbandlambdasonde dargestellt. Der steile Abschnitt der Referenzkennlinie 300 ist durch ein Pumpstromintervall oder Lambdaintervall mit einer unteren Grenze 302 und einer oberen Grenze 304 sowie durch ein Pumpspannungsintervall mit einer unteren Grenze 306 und einer oberen Grenze 308 definiert. Die jeweiligen Messwerte 310, 312 für den gemessenen Pumpstrom Ip bzw. Lambda sind ebenfalls dargestellt. Dabei sind Messwerte außerhalb des Pumpstrom- bzw. Lambdaintervalls und Pumpspannungsintervalls mit 310 bezeichnet und Messwerte innerhalb des Pumpstrom- bzw. Lambdaintervalls und Pumpspannungsintervalls sind mit 312 bezeichnet. Die so berechnete Regressionsgerade 314 ist ebenfalls dargestellt. Da es sich bei dem Beispiel in Figur 3 um eine neue Breitbandlambdasonde ohne Offset handelt, ist ein horizontaler Abstand 316 der Regressionsgeraden 314 von der Referenzkennlinie 300 an einer vorbestimmten Stelle innerhalb des Abschnitts mit dem steilen Verlauf, wie beispielsweise bei einer Pumpspannung Up =0 mV, ebenfalls null, was keinen Offset anzeigt.

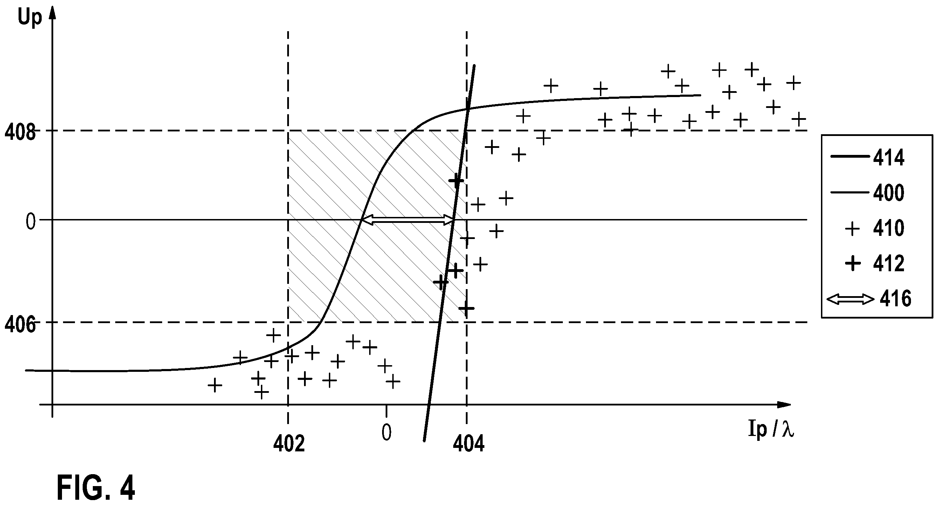

Figur 4 zeigt ein Ergebnis des Verfahrens bei einer neuen Breitbandlambdasonde mit Offset. Bei dem gezeigten Beispiel ist auf der X-Achse der gemessene Pumpstrom Ip oder das gemessene Lambda aufgetragen. Auf der Y-Achse ist die davon abhängige Pumpspannung Up aufgetragen. Weiterhin ist der Verlauf einer beispielhaften Referenzkennlinie 400 der neuen Breitbandlambdasonde dargestellt. Der steile Abschnitt der Referenzkennlinie 400 ist durch ein Pumpstromintervall oder Lambdaintervall mit einer unteren Grenze 402 und einer oberen Grenze 404 sowie durch ein Pumpspannungsintervall mit einer unteren Grenze 406 und einer oberen Grenze 408 definiert. Die jeweiligen Messwerte 410, 412 für den gemessenen Pumpstrom Ip bzw. Lambda sind ebenfalls dargestellt. Dabei sind Messwerte außerhalb des Pumpstrom- bzw. Lambdaintervalls und Pumpspannungsintervalls mit 410 bezeichnet und Messwerte innerhalb des Pumpstrom- bzw. Lambdaintervalls und Pumpspannungsintervalls sind mit 412 bezeichnet. Die so berechnete Regressionsgerade 414 ist ebenfalls dargestellt. Da es sich bei dem Beispiel in Figur 4 um eine neue Breitbandlambdasonde mit Offset handelt, ist ein horizontaler Abstand 416 der Regressionsgeraden 414 von der Referenzkennlinie 400 an einer vorbestimmten Stelle innerhalb des Abschnitts mit dem steilen Verlauf, wie beispielsweise bei einer Pumpspannung Up =0 mV, von null verschieden, was einen Offset anzeigt.

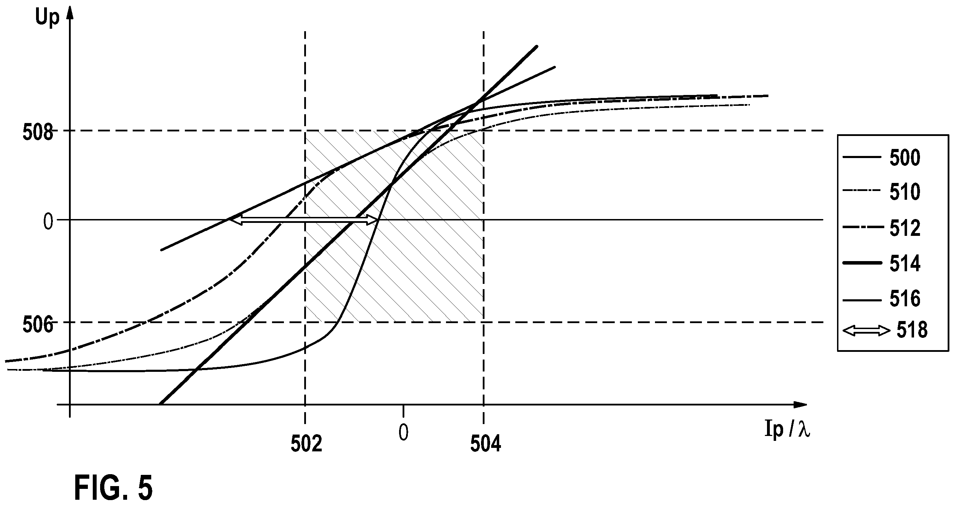

Figur 5 zeigt ein Ergebnis des Verfahrens bei gealterten Breitbandlambdasonden mit Offset. Bei dem gezeigten Beispiel ist auf der X-Achse der gemessene Pumpstrom Ip oder das gemessene Lambda aufgetragen. Auf der Y-Achse ist die davon abhängige Pumpspannung Up aufgetragen. Weiterhin ist der Verlauf einer beispielhaften Referenzkennlinie 500 einer neuen Breitbandlambdasonde dargestellt. Der steile Abschnitt der Referenzkennlinie 500 ist durch ein Pumpstromintervall oder Lambdaintervall mit einer unteren Grenze 502 und einer oberen Grenze 504 sowie durch ein Pumpspannungsintervall mit einer unteren Grenze 506 und einer oberen Grenze 508 definiert. Weiterhin sind ein erster Verlauf 510 der Pumpspannung Up abhängig von Ip oder Lambda einer ersten gealterten Breitbandlambdasonde sowie ein zweiter Verlauf 512 der Pumpspannung Up abhängig von Ip oder Lambda dargestellt. Eine berechnete erste Regressionsgerade 514 der ersten gealterten Breitbandlambdasonde und eine berechnete zweite Regressionsgerade 516 der zweiten gealterten Breitbandlambdasonde sind ebenfalls dargestellt. Da es sich bei dem Beispiel in Figur 5 um gealterte Breitbandlambdasonden mit Offset handelt, ist ein horizontaler Abstand 518 von beispielsweise der zweiten Regressionsgeraden 516 von der Referenzkennlinie 500 an einer vorbestimmten Stelle innerhalb des Abschnitts mit dem steilen Verlauf, wie beispielsweise bei einer Pumpspannung Up =0 mV von null verschieden, was einen Offset anzeigt.

## Patentansprüche

1. Verfahren zum Betreiben einer Breitbandlambdasonde (110), wobei die Breitbandlambdasonde (110) ein keramisches Sensorelement (112) aufweist, das eine elektrochemische Pumpzelle (116), eine elektrochemische Nernstzelle (216), eine Diffusionsbarriere (128) und einen Hohlraum (130) aufweist, wobei der Hohlraum (130) über die Diffusionsbarriere (128) mit einem Abgas (114) kommuniziert, wobei die elektrochemische Pumpzelle (116) eine äußere Pumpelektrode (118) aufweist, die dem Abgas (114) unmittelbar ausgesetzt ist, und eine innere Pumpelektrode (118`) aufweist, die in dem Hohlraum (130) angeordnet ist, und einen zwischen der äußere Pumpelektrode (118) und der inneren Pumpelektrode (118`) angeordneten ersten Festelektrolyten (120) aufweist, wobei die elektrochemische Nernstzelle (216) eine Nernstelektrode (218) aufweist, die in dem Hohlraum (130) angeordnet ist, und eine Referenzelektrode (218`) aufweist, die in einem Referenzgasraum (219) angeordnet ist, und einen zwischen der Nernstelektrode (218) und der Referenzelektrode (218`) angeordneten zweiten Festelektrolyten (120`) aufweist, wobei zwischen der äußeren Pumpelektrode (118) und der inneren Pumpelektrode (118') eine Pumpspannung (Up) anlegbar ist, so dass ein Pumpstrom (Ip) fließt, wobei zwischen der Nernstelektrode (218) und der Referenzelektrode (218') eine Nernstspannung (Un) messbar ist, wobei basierend auf dem Pumpstrom ein Lambdawert (λ) eines Messgases erfassbar ist, wobei das Verfahren die folgenden Schritte umfasst:
- Regeln der Nernstspannung (Un) auf einen vorgegebenen Sollwert durch Stellen der Pumpspannung (Up) und/oder des Pumpstroms (Ip),
- Messen der Pumpspannung (Up), des Pumpstroms (Ip) und/oder des Lambdawerts (λ),
- Bilden von Messwertpaaren basierend auf gemessenen Messwerten der Pumpspannung (Up), des Pumpstroms (Ip) und/oder des Lambdawerts (λ),
- Berechnen einer Regressionsgeraden (314, 414, 514, 516) basierend auf den Messwertpaaren zum Approximieren eines vorbestimmten Abschnitts einer Referenzkennlinie (300, 400, 500) der Pumpspannung (Up), und
- Ermitteln eines Pumpstromoffsets und/oder Lambdaoffsets basierend auf der Regressionsgeraden (314, 414, 514, 516).

2. Verfahren nach dem vorhergehenden Anspruch, wobei der vorbestimmte Abschnitt der Referenzkennlinie (300, 400, 500) ein Abschnitt mit einem steilen Verlauf ist.

3. Verfahren nach dem vorhergehenden Anspruch, wobei der Abschnitt mit dem steilen Verlauf durch ein Pumpstromintervall, Lambdaintervall und/oder Pumpspannungsintervall definiert ist.

4. Verfahren nach einem der vorhergehenden Ansprüche, weiterhin umfassend Ermitteln des Pumpstromoffsets und/oder Lambdaoffsets basierend auf einem Abstand der Regressionsgeraden (314, 414, 514, 516) von der Referenzkennlinie (300, 400, 500) der Pumpspannung (Up) an einer vorbestimmten Stelle.

5. Verfahren nach dem vorhergehenden Anspruch, wobei die vorbestimmte Stelle ein Pumpstrom (Ip) bei einer Pumpspannung (Up) von 0 mV oder ein Pumpstrom (Ip) bei Lambda =1 ist.

6. Verfahren nach einem der vorhergehenden Ansprüche, weiterhin umfassend Ermitteln von einem korrigierten Pumpstrom und/oder Lambdawerts basierend auf dem Pumpstromoffset und/oder Lambdaoffset.

7. Verfahren nach einem der vorhergehenden Ansprüche, weiterhin umfassend Durchführen einer Diagnose der Breitbandlambdasonde (110), wobei ein Fehler der Breitbandlambdasonde (110) identifiziert wird, falls der Pumpstromoffset und/oder Lambdaoffset einen ersten vorbestimmten Schwellwert überschreitet oder einen zweiten vorbestimmten Schwellwert, der sich von dem ersten vorbestimmten Schwellwert unterscheidet, unterschreitet.

8. Verfahren nach einem der vorhergehenden Ansprüche, wobei die Regressionsgerade (314, 414, 514, 516) mittels des Verfahrens der kleinsten Quadrate berechnet wird, wobei das Verfahren der kleinsten Quadrate bevorzugt rekursiv implementierbar ist.

9. Verfahren nach einem der vorhergehenden Ansprüche, wobei die Messwertpaare eine gemessene Pumpspannung (Up) abhängig vom Pumpstrom (Ip), einen gemessenen Pumpstrom (Ip) abhängig von der Pumpspannung (Up), eine gemessene Pumpspannung (Up) abhängig von Lambda oder gemessenes Lambda abhängig von der Pumpspannung (Up) umfassen.

10. Computerprogramm, welches dazu eingerichtet ist, unter Verwendung einer Breitbandlambdasonde, jeden Schritt des Verfahrens nach einem der vorhergehenden Ansprüche durchzuführen.

11. Elektronisches Speichermedium, auf welchem ein Computerprogramm nach dem vorhergehenden Anspruch gespeichert ist.

12. Elektronisches Steuergerät, welches ein elektronisches Speichermedium nach dem vorhergehenden Anspruch umfasst.

## Claims

1. Method for operating a broadband lambda probe (110), wherein the broadband lambda probe (110) has a ceramic sensor element (112), which has an electrochemical pumping cell (116), an electrochemical Nernst cell (216), a diffusion barrier (128) and a cavity (130), wherein the cavity (130) communicates via the diffusion barrier (128) with an exhaust gas (114), wherein the electrochemical pumping cell (116) has an outer pumping electrode (118), which is directly exposed to the exhaust gas (114), and has an inner pumping electrode (118'), which is arranged in the cavity (130), and has a first solid electrolyte (120), which is arranged between the outer pumping electrode (118) and the inner pumping electrode (118'), wherein the electrochemical Nernst cell (216) has a Nernst electrode (218), which is arranged in the cavity (130), and has a reference electrode (218'), which is arranged in a reference gas chamber (219), and has a second solid electrolyte (120'), which is arranged between the Nernst electrode (218) and the reference electrode (218'), wherein a pumping voltage (Up) can be applied between the outer pumping electrode (118) and the inner pumping electrode (118'), so that a pumping current (Ip) flows, wherein a Nernst voltage (Un) can be measured between the Nernst electrode (218) and the reference electrode (218'), wherein a lambda value (λ) of a measuring gas can be detected on the basis of the pumping current, wherein the method comprises the following steps:
- controlling the Nernst voltage (Un) to a predetermined setpoint value by adjusting the pumping voltage (Up) and/or the pumping current (Ip),
- measuring the pumping voltage (Up), the pumping current (Ip) and/or the lambda value (λ),
- forming pairs of measured values on the basis of measured values measured for the pumping voltage (Up), the pumping current (Ip) and/or the lambda value (λ),
- calculating a regression line (314, 414, 514, 516) on the basis of the pairs of measured values to approximate a predetermined portion of a reference characteristic (300, 400, 500) of the pumping voltage (Up), and
- ascertaining a pumping current offset and/or a lambda offset on the basis of the regression lines (314, 414, 514, 516) .

2. Method according to the preceding claim, wherein the predetermined portion of the reference characteristic (300, 400, 500) is a portion with a steep slope.

3. Method according to the preceding claim, wherein the portion with the steep slope is defined by a pumping current interval, lambda interval and/or pumping voltage interval.

4. Method according to one of the preceding claims, further comprising ascertaining the pumping current offset and/or lambda offset on the basis of a distance from the regression line (314, 414, 514, 516) to the reference characteristic (300, 400, 500) of the pumping voltage (Up) at a predetermined point.

5. Method according to the preceding claim, wherein the predetermined point is a pumping current (Ip) at a pumping voltage (Up) of 0 mV or a pumping current (Ip) at lambda = 1.

6. Method according to one of the preceding claims, further comprising ascertaining a corrected pumping current and/or lambda value on the basis of the pumping current offset and/or lambda offset.

7. Method according to one of the preceding claims, further comprising carrying out a diagnosis of the broadband lambda probe (110), wherein a fault of the broadband lambda probe (110) is identified if the pumping current offset and/or lambda offset goes above a first predetermined threshold value or goes below a second predetermined threshold value, which differs from the first predetermined threshold value.

8. Method according to one of the preceding claims, wherein the regression line (314, 414, 514, 516) is calculated by means of the method of least squares, wherein the method of least squares is preferably recursively implementable.

9. Method according to one of the preceding claims, wherein the pairs of measured values comprise a measured pumping voltage (Up) dependent on the pumping current (Ip), a measured pumping current (Ip) dependent on the pumping voltage (Up), a measured pumping voltage (Up) dependent on lambda or measured lambda dependent on the pumping voltage (Up).

10. Computer program designed to carry out each step of the method according to one of the preceding claims by using a broadband lambda probe.

11. Electronic storage medium in which a computer program according to the preceding claim is stored.

12. Electronic control device which comprises an electronic storage medium according to the preceding claim.

## Revendications

1. Procédé de fonctionnement d'une sonde lambda à large bande (110), la sonde lambda à large bande (110) comportant un élément capteur en céramique (112) qui comporte une cellule formant pompe électrochimique (116), une cellule de Nernst électrochimique (216), une barrière de diffusion (128) et une cavité (130), la cavité (130) communiquant avec un gaz d'échappement (114) par le biais de la barrière de diffusion (128), la cellule formant pompe électrochimique (116) comportant une électrode de pompe extérieure (118) qui est directement exposée au gaz d'échappement (114) et une électrode de pompe intérieure (118') qui est disposée à l'intérieur de la cavité (130) et qui comporte un premier électrolyte solide (120) disposé entre l'électrode de pompe extérieure (118) et l'électrode de pompe intérieure (118'), la cellule de Nernst électrochimique (216) comportant une électrode de Nernst (218) qui est disposée dans la cavité (130) et une électrode de référence (218') qui est disposée dans un espace de gaz de référence (219) et qui comporte un deuxième électrolyte solide (120') disposé entre l'électrode de Nernst (218) et l'électrode de référence (218'), une tension de pompe (Up) pouvant être appliquée entre l'électrode de pompe extérieure (118) et l'électrode de pompe intérieure (118') de façon à faire circuler un courant de pompe (Ip), une tension de Nernst (Un) pouvant être mesurée entre l'électrode de Nernst (218) et l'électrode de référence (218'), une valeur lambda (λ) d'un gaz de mesure pouvant être détectée sur la base du courant de pompe, le procédé comprenant les étapes suivantes :
- réguler la tension de Nernst (Un) à une valeur cible spécifiée par ajustement de la tension de pompe (Up) et/ou du courant de pompe (Ip),
- mesurer la tension de pompe (Up), le courant de pompe (Ip) et/ou la valeur lambda (λ),
- former des paires de valeurs de mesure à partir des valeurs de mesure de la tension de pompe (Up), du courant de pompe (Ip) et/ou de la valeur lambda (λ),
- calculer une droite de régression (314, 414, 514, 516) sur la base des paires de valeurs de mesure pour approximer une portion prédéterminée d'une caractéristique de référence (300, 400, 500) de la tension de pompe (Up), et
- déterminer un décalage de courant de pompe et/ou un décalage de lambda sur la base de la droite de régression (314, 414, 514, 516).

2. Procédé selon la revendication précédente, la portion prédéterminée de la caractéristique de référence (300, 400, 500) étant une portion avec une forte pente.

3. Procédé selon la revendication précédente, la portion avec la forte pente étant définie par un intervalle de courant de pompe, un intervalle lambda de et/ou un intervalle de tension de pompe.

4. Procédé selon l'une des revendications précédentes, comprenant en outre l'étape de détermination du décalage de courant de pompe et/ou du décalage de lambda en fonction d'une distance de la droite de régression (314, 414, 514, 516) à la caractéristique de référence (300, 400, 500) de la tension de pompe (Up) à un point prédéterminé.

5. Procédé selon la revendication précédente, le point prédéterminé étant un courant de pompe (Ip) pour une tension de pompe (Up) de 0 mV ou un courant de pompe (Ip) pour un lambda = 1.

6. Procédé selon l'une des revendications précédentes, comprenant en outre l'étape de détermination d'un courant de pompe corrigé et/ou d'une valeur de lambda corrigée basée sur le base du décalage de courant de pompe et/ou du décalage de lambda.

7. Procédé selon l'une des revendications précédentes, comprenant en outre l'étape de réalisation d'un diagnostic de la sonde lambda à large bande (110), un défaut de la sonde lambda à large bande (110) étant identifié si le décalage de courant de pompe et/ou le décalage de lambda devient supérieur à une première valeur de seuil prédéterminée ou devient inférieur à une deuxième valeur de seuil prédéterminée qui est différente de la première valeur de seuil prédéterminée.

8. Procédé selon l'une des revendications précédentes, la droite de régression (314, 414, 514, 516) étant calculée par la méthode des moindres carrés, la méthode des moindres carrés pouvant de préférence être mise en œuvre de manière récursive.

9. Procédé selon l'une des revendications précédentes, les paires de valeurs de mesure comprenant une tension de pompe mesurée (Up) en fonction du courant de pompe (Ip), un courant de pompe mesuré (Ip) en fonction de la tension de pompe (Up), une tension de pompe mesurée (Up) en fonction de lambda ou de lambda mesuré en fonction de la tension de pompe (Up).

10. Logiciel qui est conçu pour réaliser chaque étape du procédé selon l'une des revendications précédentes à l'aide d'une sonde lambda à large bande.

11. Support de stockage électronique sur lequel est mémorisé un logiciel selon la revendication précédente.

12. Unité de commande électronique, qui comprend un support de stockage électronique selon la revendication précédente.
